# EUROPÄISCHE PATENTSCHRIFT

(11) **EP 3 354 535 B1**
(45) Veröffentlichungstag und Bekanntmachung des Hinweises auf die Patenterteilung: **01.07.2020**
(21) Anmeldenummer: 18150920.9
(22) Anmeldetag: 10.01.2018
(51) Int. Cl.: B62B 3/06

(54) **FLURFÖRDERZEUG, INSBESONDERE HUBWAGEN**
INDUSTRIAL TRUCK, IN PARTICULAR JACK LIFT
CHARIOT DE MANUTENTION, EN PARTICULIER CHARIOT ÉLÉVATEUR

(30) Priorität: 23.01.2017 DE 102017101189
(43) Veröffentlichungstag der Anmeldung: 01.08.2018
(73) Patentinhaber: Linde Material Handling GmbH, 63743 Aschaffenburg (DE)
(72) Erfinder: LARDEUX, Jean-Charles, 86130St Georges le Baillargeaux (FR); NAUDIN, Eric, 37800 Draché (FR)
(74) Vertreter: Patentship Patentanwaltsgesellschaft mbH

(56) Entgegenhaltungen:
- EP-A1- 2 946 983
- BE-A- 500 853
- DE-A1-102009 059 949
- DE-B- 1 033 137
- GB-A- 2 022 052
- NL-A- 7 906 341

## Beschreibung

Die Erfindung betrifft ein Flurförderzeug, insbesondere Hubwagen, mit einem Antriebsteil, das mindestens ein gelenktes Rad aufweist, und einem zumindest einen Lastarm umfassendes Lastteil, wobei der Lastarm an der Spitze mit einer Lastrolleneinrichtung versehen ist, wobei sich das Flurförderzeug mittels des am Antriebsteil angeordneten gelenkten Rades und der an der Spitze des Lastarms angeordneten Lastrolleneinrichtung auf einer Fahrbahn abstützt, wobei der Lastteil mittels einer Initialhubvorrichtung relativ zum Antriebsteil anhebbar und absenkbar ist, wobei die Lastrolleneinrichtung über einen Lastrollenhebel schwenkbar am Lastarm angeordnet ist, wobei der Lastrollenhebel an einem Schwenklager an dem Lastarm um eine Schwenkachse schwenkbar gelagert ist und wobei die Initialhubvorrichtung zum Anheben des Lastarms ein mit dem Lastrollenhebel in Wirkverbindung stehendes Gestänge und einen das Gestänge betätigenden Betätigungshebel umfasst, wobei der Betätigungshebel an einem Schwenklager an dem Lastteil um eine Schwenkachse schwenkbar gelagert ist und das Gestänge an dem Betätigungshebel an einem Koppelpunkt gelenkig angekoppelt ist.

Ein gattungsgemäßes Flurförderzeug ist aus der NL 7 906 341 A1 bekannt.

Bekannte gattungsgemäße Flurförderzeuge mit Lastarmen dienen dazu, mit den Lastarmen unter einen Ladungsträger, beispielsweise eine Palette, eine Gitterbox oder einen Rollenkäfig, zu fahren und den Ladungsträger anzuheben. Zum Anheben des Ladungsträgers werden hierbei die Lastarme angehoben. Hierzu wird der Lastteil relativ zu dem Antriebsteil mittels der Initialhubvorrichtung angehoben, wobei schwenkbar an den Lastarmen angeordnete Lastrollenhebel, in denen die Lastrolleneinrichtungen drehbar gelagert sind, über den Betätigungshebel und die Gestänge betätigt werden, um die Lastarme anzuheben. Mit der Initialhubvorrichtung können die Lastarme in der Regel um 10 bis 20 cm angehoben werden. Gattungsgemäße Flurförderzeug mit einer Initialhubvorrichtung zum Anheben der Lastarme können als Hubwagen, beispielsweise Niederhubwagen oder Hochhubwagen, oder als Kommissionier ausgebildet sein.

Bei bekannten Flurförderzeugen mit einer Initialhubvorrichtung ist die Kinematik des Betätigungshebels und/oder des Lastrollenhebels derart ausgeführt, dass beim Anheben der Lastarme die Lastarme parallel zu einer Fahrbahn angehoben werden. In der angehobenen Stellung der Lastarme sind diese somit rein horizontal angehoben und parallel zur Fahrbahn orientiert. Beim Fahren des Flurförderzeugs mit angehobenen Lastarmen kann hierbei auftreten, dass ein auf den angehobenen Lastarmen aufgenommener Ladungsträger bei einem Bremsvorgang auf den Lastarmen rutscht und hierbei von den Lastarmen rutschen kann, insbesondere wenn das Flurförderzeug eine Rampe und somit eine geneigte Fahrbahn befährt und/oder der Ladungsträger, beispielsweise eine Gitterbox oder ein Rollenkäfig, aus einem rutschigen Material, beispielsweise Metall, besteht oder eine rutschige Oberfläche aufweist, mit der sich der Ladungsträger auf den Lastarmen befindet, und somit zwischen den Lastarmen und dem Ladungsträger ein geringer Reibungskoeffizient auftritt.

Das Rutschen des Ladungsträgers auf den Lastarmen bzw. von den Lastarmen kann zu Beschädigungen an dem Ladungsträger sowie zu Beschädigungen an den mit dem Ladungsträger transportierten Ladungen führen. Zudem können beim Rutschen des Ladungsträgers von den Lastarmen sich in der näheren Umgebung des Flurförderzeugs befindliche Gegenstände beschädigt werden und/oder sich in der näheren Umgebung des Flurförderzeugs befindliche Personen gefährdet werden.

Um ein Rutschen des Ladungsträgers auf den Lastarmen bzw. von den Lastarmen zu vermeiden, ist daher der Fahrer des Flurförderzeugs gezwungen, die Fahrgeschwindigkeit mit angehobenem Ladungsträger zu verringern. Dies führt jedoch zu einer Verringerung der Umschlagsleistung des Flurförderzeugs.

Aus der GB 2 022 052 A ist ein Flurförderzeug bekannt mit einem Antriebsteil, das mindestens ein gelenktes Rad aufweist, und einem zumindest einen Lastarm umfassendes Lastteil, wobei der Lastarm an der Spitze mit einer Lastrolleneinrichtung versehen ist, wobei sich das Flurförderzeug mittels des am Antriebsteil angeordneten gelenkten Rades und der an der Spitze des Lastarms angeordneten Lastrolleneinrichtung auf einer Fahrbahn abstützt, wobei der Lastteil mittels einer Initialhubvorrichtung relativ zum Antriebsteil anhebbar und absenkbar ist, wobei die Lastrolleneinrichtung über einen Lastrollenhebel schwenkbar am Lastarm angeordnet ist, wobei der Lastrollenhebel an einem Schwenklager an dem Lastarm um eine Schwenkachse schwenkbar gelagert ist und wobei die Initialhubvorrichtung zum Anheben des Lastarms ein mit dem Lastrollenhebel in Wirkverbindung stehendes Gestänge umfasst. Der Lastteil ist um eine Schwenkachse schwenkbar am Antriebsteil angeordnet. Zum Neigen des Lastteils um die Schwenkachse ist ein Hydraulikzylinder vorgesehen, der eine Welle betätigt. Die Welle erstreckt sich durch Hülsen, die an Gestängen angeordnet sind, die die am Laststeil schwenkbar angeordneten Lastrollenhebel betätigen, an denen die Lastrollen drehbar angeordnet sind. Mit dem Hydraulikzylinder kann der Lastteil durch Betätigen der Gestänge und somit der Lastrollenhebel um die Schwenkachse verschwenkt werden zwischen einer abgesenkten Stellung, in der die Spitze des Lastteils nach vorne geneigt ist und einer angehobenen Stellung, in der der Lastteil waagerecht oder leicht rückgeneigt ist. Um den Antriebsteil hierbei parallel zur Fahrbahn zu halten, steht die Welle mit Kurbelarmen in Verbindung, die ebenfalls um die Schwenkachse schwenkbar am Antriebsteil angeordnet ist. Der Kurbelarm steht über einen Lenker mit einem Hebel in Verbindung, der am Antriebsteil um eine Achse drehbar angeordnet ist. Ein zweiter Lenker verbindet den Hebel mit dem antriebsteilseitigen Ende des Lastteils.

Der vorliegenden Erfindung liegt die Aufgabe zugrunde, ein Flurförderzeug der eingangs genannten Gattung zur Verfügung zu stellen, bei dem auch bei höheren Fahrgeschwindigkeiten ein Rutschen des Ladungsträgers auf den Lastarmen bzw. von den Lastarmen vermieden werden kann.

Diese Aufgabe wird erfindungsgemäß dadurch gelöst, dass der Betätigungshebel an dem Antriebsteil an einem weiteren Koppelpunkt gelenkig angekoppelt ist und die Kinematik des Lastrollenhebels und/oder des Betätigungshebels derart ausgeführt ist, dass beim Anheben des Lastteils mittels der Initialhubvorrichtung von der abgesenkten Stellung in die angehobene Stellung ein Rückneigen des Lastarms erzielt wird. Erfindungsgemäß ist die Kinematik und somit das Hebelarmverhältnis (geometrische Verhältnisse) des Lastrollenhebels und/oder die Kinematik und somit das Hebelarmverhältnis (geometrische Verhältnisse) des Betätigungshebels derart ausgeführt, dass der Lastarm in der abgesenkten Stellung des Lastteils parallel zur Fahrbahn angeordnet ist und sich beim Anheben des Lastteils ein Rückneigen der Lastarme ergibt, so dass in der angehobenen Stellung die Lastarme im Bereich der Spitzen weiter angehoben sind als im Bereich des Antriebsteils. Durch dieses Rückneigen der Lastarme wird erzielt, dass ein auf den angehobenen Lastarmen befindlicher Ladungsträger zurückgehalten wird, so dass die Gefahr verringert wird bzw. vermieden wird, dass ein auf den angehobenen Lastarmen aufgenommener Ladungsträger bei einem Bremsvorgang auf den Lastarmen rutschen und von den Lastarmen rutschen kann, insbesondere wenn das Flurförderzeug eine Rampe und somit eine geneigte Fahrbahn befährt und/oder der Ladungsträger, beispielsweise eine Gitterbox oder ein Rollenkäfig, aus einem rutschigen Material, beispielsweise Metall, besteht oder eine rutschige Oberfläche aufweist, mit der sich der Ladungsträger auf den Lastarmen befindet, und somit zwischen den Lastarmen und dem Ladungsträger ein geringer Reibungskoeffizient auftritt.

Bei dem erfindungsgemäßen Flurförderzeug wird somit mit den zurückgeneigten angehobenen Lastarmen durch das Vermeiden eines Rutschens des Ladungsträgers auf den Lastarmen bzw. von den Lastarmen verhindert, dass es zu Beschädigungen an dem Ladungsträger sowie zu Beschädigungen an den mit dem Ladungsträger transportierten Ladungen kommt. Zudem wird verhindert, dass durch Rutschen des Ladungsträgers von den Lastarmen sich in der näheren Umgebung des Flurförderzeugs befindliche Gegenstände beschädigt werden und/oder sich in der näheren Umgebung des Flurförderzeugs befindliche Personen gefährdet werden.

Da bei dem erfindungsgemäßen Flurförderzeug ein Rutschen des Ladungsträgers auf den Lastarmen bzw. von den Lastarmen durch die in der angehobenen Stellung mittels der Initialhubvorrichtung zurückgeneigten Lastarme vermieden wird, kann das Flurförderzeug bei aufgenommenem und angehobenem Ladungsträger mit einer hohen Fahrgeschwindigkeit betrieben werden, so dass mit dem erfindungsgemäßen Flurförderzeug eine hohe Umschlagsleistung erzielt werden kann.

Gemäß einer vorteilhaften Ausgestaltungsform der Erfindung ist die Lastrolleneinrichtung an dem Lastrollenhebel mit einem ersten Hebelarm drehbar gelagert ist und das Gestänge an dem Lastrollenhebel mit einem zweiten Hebelarm gelenkig gekoppelt ist, wobei die Länge des ersten Hebelarms derart ausgeführt ist, dass beim Anheben des Lastteils ein Rückneigen des Lastarms erzielt wird. Durch Verlängern des ersten Hebelarms des Lastrollenhebels kann auf einfache Weise und mit geringem Bauaufwand eine Kinematik erzielt werden, bei der beim Anheben des Lastteils mittels der Initialhubvorrichtung ein Rückneigen des Lastarmes erzielt wird.

Weitere Vorteile und Einzelheiten der Erfindung werden anhand des in den schematischen Figuren dargestellten Ausführungsbeispiels näher erläutert. Hierbei zeigt
- Figur 1: ein gattungsgemäßes Flurförderzeug des Standes der Technik mit abgesenkten Lastarmen,
- Figur 2: das Flurförderzug des Standes der Technik der Figur 1 mit angehobenen Lastarmen,
- Figur 3: ein erfindungsgemäßes Flurförderzeug mit abgesenkten Lastarmen und
- Figur 4: das erfindungsgemäße Flurförderzeug der Figur 3 mit angehobenen Lastarmen.

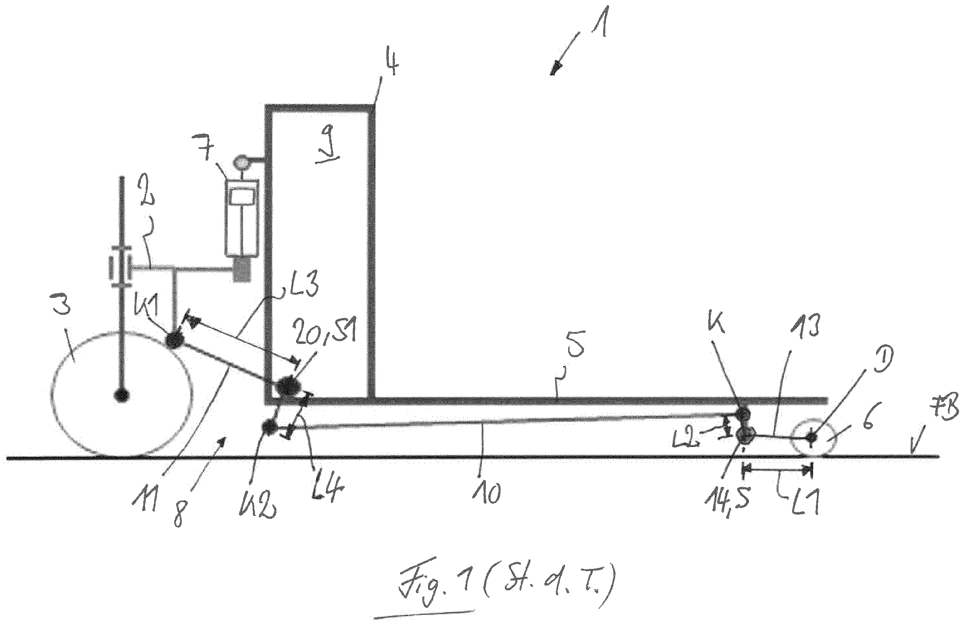

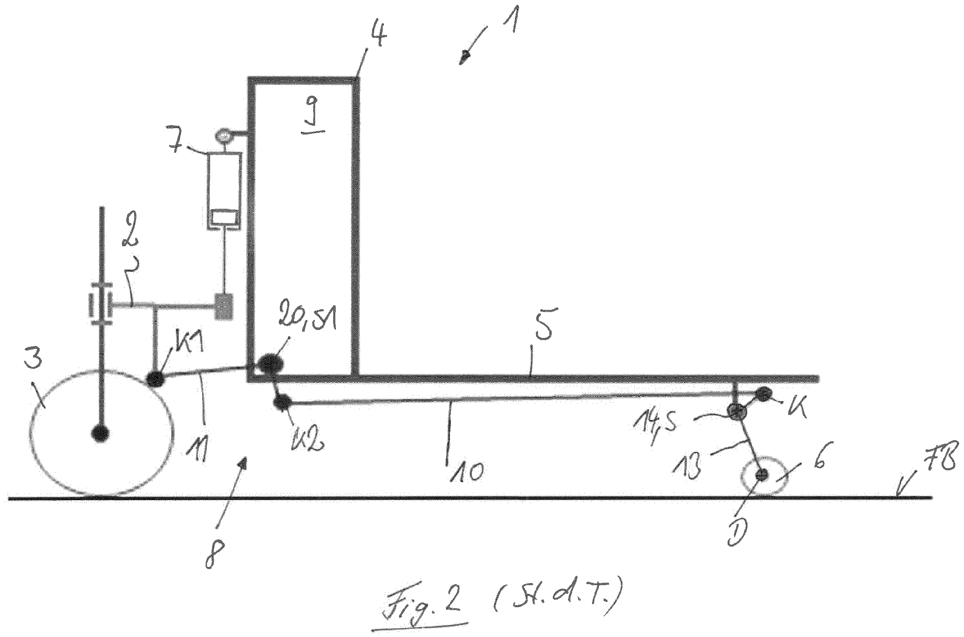

In den Figuren 1 und 2 sind ein gattungsgemäßes Flurförderzeug 1 des Standes der Technik in einer Seitenansicht dargestellt.

Das in den Figuren 1 und 2 dargestellte Flurförderzeug 1 ist als Hubwagen, beispielsweise Niederhubwagen, ausgebildet.

Das Flurförderzeug 1 weist einen Antriebsteil 2 auf, der mit einem lenkbaren Rad 3 versehen ist, und einen relativ zum Antriebsteil 2 mittels einer Initialhubvorrichtung 8 anhebbaren und absenkbaren Lastteil 4 auf. Das lenkbare Rad 3 kann als Antriebsrad ausgebildet sein, das von einem elektrischen Fahrantrieb angetrieben wird. Der Lastteil 4 umfasst bevorzugt zwei seitlich beabstandete Lastarme 5. Die Lastarme 5 sind an den Spitzen jeweils mit einer Lastrolleneinrichtung 6 versehen. Die Lastrolleneinrichtung 6 kann als Einzelrolle mit einer Lastrolle oder als Doppelrolle mit zwei Lastrollen ausgebildet sein.

Das Flurförderzeug 1 stützt sich mit dem lenkbaren Rad 3 und den an den Spitzen der Lastarme 5 angeordneten Lastrolleneinrichtungen 6 auf einer Fahrbahn FB ab.

Die Initialhubvorrichtung 8 zum Anheben und Absenken des Lastteils 4 umfasst eine Hubeinrichtung 7, beispielsweise ein oder mehrere Hydraulikzylinder, die zwischen dem Antriebsteil 2 und dem Lastteil 4 angeordnet ist. Um die Hubbewegung des Lastteils 4 auf die Lastrolleinrichtung 6 an den Spitzen der Lastarme 5 zu übertragen, umfasst die Initialhubvorrichtung 8 für jeden Lastarm 5 ein mit der entsprechenden Lastrolleneinrichtung 6 in Wirkverbindung stehendes Gestänge 10 und einen das Gestänge 10 betätigenden Betätigungshebel 11. Das Gestänge 10 steht zum Betätigen der Lastrolleneinrichtung 6 mit einem Lastrollenhebel 13 der Initialhubvorrichtung 8 in Wirkverbindung. Die Lastrolleneinrichtung 6 ist jeweils an dem Lastrollenhebel 13 drehbar angeordnet, der an dem entsprechenden Lastarm 5 schwenkbar angeordnet ist.

Der Lastteil 4 kann weiterhin bei einem batterie-elektrisch betriebenen Flurförderzeug 1 ein Batteriefach 9 für eine Traktionsbatterie umfassen, die einen elektrischen Fahrantrieb des als Antriebsrad ausgebildeten gelenkten Rades 3 und einen elektrischen Antrieb der Hubeinrichtung 7 mit elektrischer Energie versorgt.

Der Lastrollenhebel 13 ist an einem Schwenklager 14 an dem Lastarm 5 um eine Schwenkachse S schwenkbar gelagert. Die Lastrolleneinrichtung 6 ist an dem Lastrollenhebel 13 um eine Drehachse D drehbar gelagert, wobei der Abstand der Drehachse D von der Schwenkachse S einen ersten Hebelarm L1 des Lastrollenhebels 13 bildet. Das Gestänge 10 ist an dem Lastrollenhebel 13 an einem Koppelpunkt K gelenkig angekoppelt, wobei der Abstand des Koppelpunktes K von der Schwenkachse S einen zweiten Hebelarm L2 des Lastrollenhebels 13 bildet. Im dargestellten Ausführungsbeispiel ist die Gestänge 10 als Druckstange ausgebildet und der Lastrollenhebel 13 als zweiarmiger Hebel, bei dem das Schwenklager 14 zwischen der Drehachse D und dem Koppelpunkt K angeordnet ist.

Der Betätigungshebel 11 ist an einem Schwenklager 20 an dem Lastteil 4 um eine Schwenkachse S1 schwenkbar gelagert. Der Betätigungshebel 11 ist an dem Antriebsteil 2 an einem Koppelpunkt K1 gelenkig angekoppelt, wobei der Abstand des Koppelpunktes K1 von der Schwenkachse S1 einen ersten Hebelarm L3 des Betätigungshebels 11 bildet. Das Gestänge 10 ist an dem Betätigungshebel 11 an einem zweiten Koppelpunkt K2 gelenkig angekoppelt, wobei der Abstand des zweiten Koppelpunktes K2 von der Schwenkachse S1 einen zweiten Hebelarm L4 des Betätigungshebels 11 bildet.

In der Figur 1 befinden sich die Lastarme 5 in der abgesenkten Stellung. In der abgesenkten Stellung sind die Lastarme 5 parallel zur Fahrbahn FB angeordnet. Zum Anheben des Lastteils 4 wird die Hubeinrichtung 7 betätigt, so dass der Lastteil 4 relativ zum Antriebsteil 2 angehoben wird. Hierbei verschwenkt der Betätigungshebel 11 um die Schwenkachse S1 und betätigt das Gestänge 10, so dass die Lastrollenhebel 13 um die Schwenkachse S nach unten verschwenkt werden, so dass die Lastrolleneinrichtung 6 nach unten betätigt wird und die Hubbewegung des Lastteils 4 auf die Lastrolleneinrichtung 6 übertragen wird. In der Figur 2 befinden sich die Lastarme 5 in der angehobenen Stellung. Bei dem Flurförderzeug 1 des Standes der Technik ist die von den Hebelarmen L1-L4 gebildete Kinematik des Betätigungshebels 11 und des Lastrollenhebels 13 derart ausgeführt, dass sich beim Anheben des Lastteils 4 die Lastarme 5 parallel zur Fahrbahn FB anheben und in der angehobenen Stellung parallel zur Fahrbahn FB angeordnet sind. Bevorzugt ist hierzu das Verhältnis L1/L2 des ersten Hebelarms L1 des Lastrollenhebels 13 zum zweiten Hebelarm L2 des Lastrollenhebels 13 gleich dem Verhältnis L3/L4 des ersten Hebelarms L3 des Betätigungshebels 11 zum zweiten Hebelarm L4 des Betätigungshebels 11.

Beim Fahren des Flurförderzeugs 1 des Stand des Technik der Figuren 1 und 2 mit angehobenen Lastarmen 5 kann hierbei auftreten, dass ein auf den angehobenen Lastarmen 5 aufgenommener Ladungsträger bei einem Bremsvorgang auf den Lastarmen 5 rutscht und hierbei von den Lastarmen 5 rutschen kann, insbesondere wenn das Flurförderzeug 1 eine Rampe und somit eine geneigte Fahrbahn FB befährt und/oder der Ladungsträger, beispielsweise eine Gitterbox oder ein Rollenkäfig, aus einem rutschigen Material, beispielsweise Metall, besteht oder eine rutschige Oberfläche aufweist, mit der sich der Ladungsträger auf den Lastarmen 5 befindet, und somit zwischen den Lastarmen 5 und dem Ladungsträger ein geringer Reibungskoeffizient auftritt.

Das Rutschen des Ladungsträgers auf den Lastarmen 5 bzw. von den Lastarmen 5 kann zu Beschädigungen an dem Ladungsträger sowie zu Beschädigungen an den mit dem Ladungsträger transportierten Ladungen führen. Zudem können beim Rutschen des Ladungsträgers von den Lastarmen 5 sich in der näheren Umgebung des Flurförderzeugs 1 befindliche Gegenstände beschädigt werden und/oder sich in der näheren Umgebung des Flurförderzeugs 1 befindliche Personen gefährdet werden.

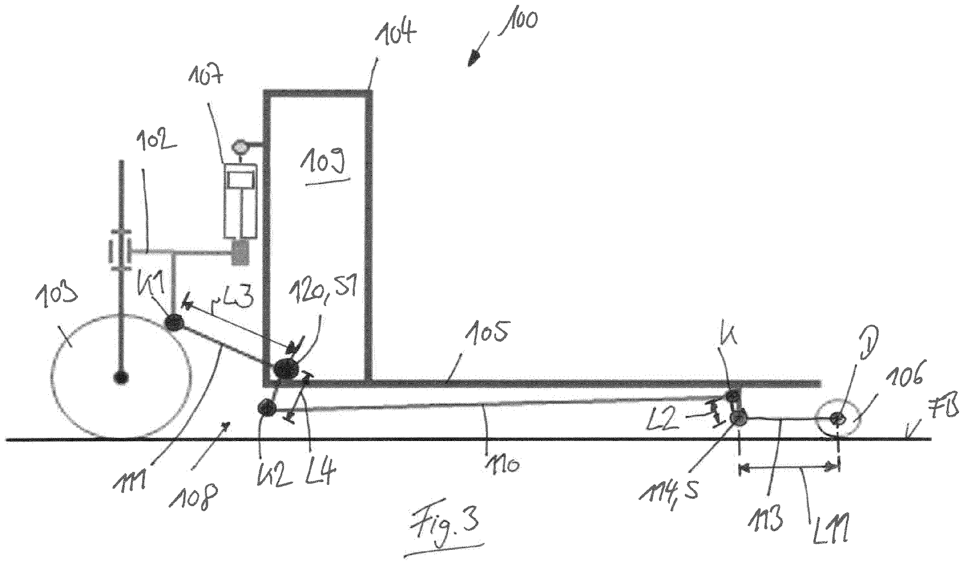

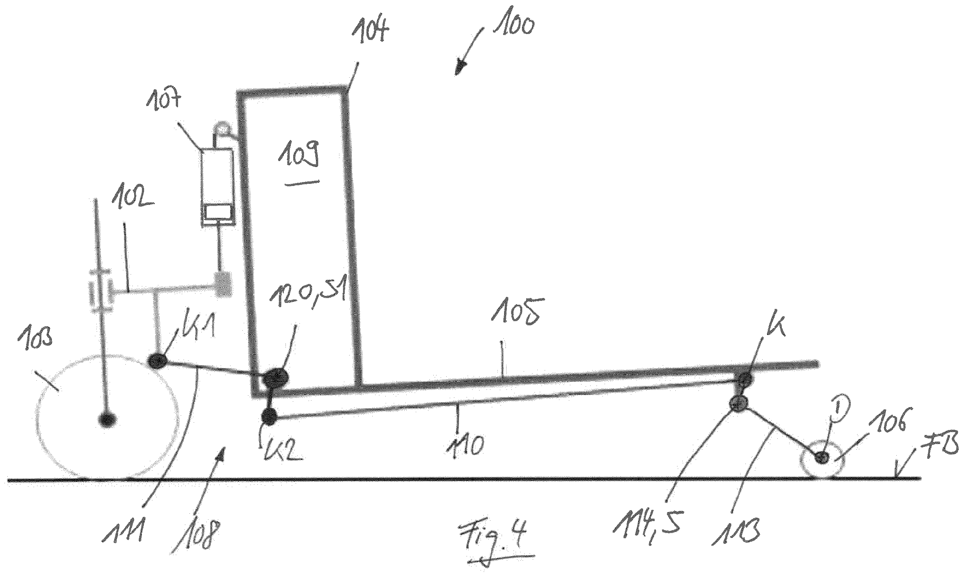

In den Figuren 3 und 4 ist ein erfindungsgemäßes Flurförderzeug 100 in einer Seitenansicht dargestellt.

Das in den Figuren 3 und 4 dargestellte Flurförderzeug 100 ist als Hubwagen, beispielsweise Niederhubwagen, ausgebildet.

Das Flurförderzeug 100 weist einen Antriebsteil 102 auf, der mit einem lenkbaren Rad 103 versehen ist, und einen relativ zum Antriebsteil 102 mittels einer Initialhubvorrichtung 108 anhebbaren und absenkbaren Lastteil 104 auf. Das lenkbare Rad 103 kann als Antriebsrad ausgebildet sein, das von einem elektrischen Fahrantrieb angetrieben wird. Der Lastteil 104 umfasst bevorzugt zwei seitlich beabstandete Lastarme 105. Die Lastarme 105 sind an den Spitzen jeweils mit einer Lastrolleneinrichtung 106 versehen. Die Lastrolleneinrichtung 106 kann als Einzelrolle mit einer Lastrolle oder als Doppelrolle mit zwei Lastrollen ausgebildet sein.

Das Flurförderzeug 100 stützt sich mit dem lenkbaren Rad 103 und den an den Spitzen der Lastarme 105 angeordneten Lastrolleneinrichtungen 106 auf einer Fahrbahn FB ab.

Die Initialhubvorrichtung 108 zum Anheben und Absenken des Lastteils 104 umfasst eine Hubeinrichtung 107, beispielsweise ein oder mehrere Hydraulikzylinder, die zwischen dem Antriebsteil 102 und dem Lastteil 104 angeordnet ist. Um die Hubbewegung des Lastteils 104 auf die Lastrolleneinrichtung 106 an den Spitzen der Lastarme 105 zu übertragen, umfasst die Initialhubvorrichtung 108 für jeden Lastarm 105 ein mit der entsprechenden Lastrolleneinrichtung 106 in Wirkverbindung stehendes Gestänge 110 und einen das Gestänge 110 betätigenden Betätigungshebel 111. Das Gestänge 110 steht zum Betätigen der Lastrolleneinrichtung 106 mit einem Lastrollenhebel 113 der Initialhubvorrichtung 108 in Wirkverbindung. Die Lastrolleneinrichtung 106 ist jeweils an dem Lastrollenhebel 113 drehbar angeordnet, der an dem entsprechenden Lastarm 105 schwenkbar angeordnet ist.

Der Lastteil 104 kann weiterhin bei einem batterie-elektrisch betriebenen Flurförderzeug 1 ein Batteriefach 109 für eine Traktionsbatterie umfassen, die einen elektrischen Fahrantrieb des als Antriebsrad ausgebildeten gelenkten Rades 103 und einen elektrischen Antrieb der Hubeinrichtung 107 mit elektrischer Energie versorgt.

Der Lastrollenhebel 113 ist an einem Schwenklager 114 an dem Lastarm 105 um eine Schwenkachse S schwenkbar gelagert. Die Lastrolleneinrichtung 106 ist an dem Lastrollenhebel 113 um eine Drehachse D drehbar gelagert, wobei der Abstand der Drehachse D von der Schwenkachse S einen ersten Hebelarm L11 des Lastrollenhebels 113 bildet. Das Gestänge 110 ist an dem Lastrollenhebel 113 an einem Koppelpunkt K gelenkig angekoppelt, wobei der Abstand des Koppelpunktes K von der Schwenkachse S einen zweiten Hebelarm L2 des Lastrollenhebels 113 bildet. Im dargestellten Ausführungsbeispiel ist das Gestänge 110 als Druckstange ausgebildet und der Lastrollenhebel 113 als zweiarmiger Hebel, bei dem das Schwenklager 114 zwischen der Drehachse D und dem Koppelpunkt K angeordnet ist.

Der Betätigungshebel 111 ist an einem Schwenklager 120 an dem Lastteil 104 um eine Schwenkachse S1 schwenkbar gelagert. Der Betätigungshebel 111 ist an dem Antriebsteil 102 an einem Koppelpunkt K1 gelenkig angekoppelt, wobei der Abstand des Koppelpunktes K1 von der Schwenkachse S1 einen ersten Hebelarm L3 des Betätigungshebels 111 bildet. Das Gestänge 110 ist an dem Betätigungshebel 111 an einem zweiten Koppelpunkt K2 gelenkig angekoppelt, wobei der Abstand des zweiten Koppelpunktes K2 von der Schwenkachse S1 einen zweiten Hebelarm L4 des Betätigungshebels 111 bildet.

In der Figur 3 befinden sich die Lastarme 105 in der abgesenkten Stellung. In der abgesenkten Stellung sind die Lastarme 105 parallel zur Fahrbahn FB angeordnet. Zum Anheben des Lastteils 104 wird die Hubeinrichtung 107 betätigt, so dass der Lastteil 104 relativ zum Antriebsteil 102 angehoben wird. Hierbei verschwenkt der Betätigungshebel 111 um die Schwenkachse S1 und betätigt das Gestänge 110, so dass die Lastrollenhebel 113 um die Schwenkachse S nach unten verschwenkt werden, so dass die Lastrolleneinrichtung 106 nach unten betätigt wird und die Hubbewegung des Lastteils 104 auf die Lastrolleneinrichtung 106 übertragen wird. In der Figur 4 befinden sich die Lastarme 105 in der angehobenen Stellung. Bei dem erfindungsgemäßen Flurförderzeug 1 der Figuren 3 und 4 ist die Kinematik des Lastrollenhebels 113 und/oder des Betätigungshebels 111 der Initialhubvorrichtung 108 derart ausgeführt, dass sich beim Anheben des Lastteils 104 ein Rückneigen der Lastarme 105 ergibt. Die von den Hebelarmen L11, L2, L3, L4 gebildete Kinematik des Betätigungshebels 111 und/oder des Lastrollenhebels 113 ist derart ausgeführt, dass beim Anheben des Lastteils 104 die Lastarme 105 mit den Spitzen weiter angehoben werden wie im Bereich des Antriebsteils 102 und sich somit die Lastarme 105 zurückneigen, so dass in der angehobenen Stellung des Lastteils 104 die Lastarme 105 geneigt zur Fahrbahn FB angeordnet sind. Das Zurückneigen der Lastarme 105 beim Anheben des Lastteils 104 führt bei dem erfindungsgemäßen Flurförderzeug 100 weiter dazu, dass das gesamte Flurförderzeug 100 um den Aufstandspunkt des gelenkten Rades 103 des Antriebsteils 102 auf der Fahrbahn FB - wie in der Figur 4 dargestellt ist - entgegen dem Uhrzeigersinn verschwenkt und somit zurückgeneigt wird.

Bei dem erfindungsgemäßen Flurförderzeug 100 ist hierzu die Länge des ersten Hebelarms L11 des Lastrollenhebels 113 derart ausgeführt, dass sich beim Anheben des Lastteils 104 ein Rückneigen der Lastarme 105 ergibt. Der Hebelarm L11 des Betätigungshebels 113 des erfindungsgemäßen Flurförderzeugs 110 ist hierbei länger ausgeführt als der Hebelarm L1 des Lastrollenhebels 13 des Flurförderzeugs 1 des Standes der Technik. Bei dem erfindungsgemäßen Flurförderzeug 100 entspricht der zweite Hebelarm L2 des Lastrollenhebels 113 dem zweiten Hebelarm L2 des Lastrollenhebels 13 des Flurförderzeugs 1 des Standes der Technik. Weiterhin entsprechen bei dem erfindungsgemäßen Flurförderzeug 100 die Hebelarme L3, L4 des Betätigungshebels 111 den Hebelarmen L3, L4 des Betätigungshebels 11 des Flurförderzeugs 1 des Standes der Technik. Gegenüber dem Flurförderzeug 1 des Standes der Technik ist somit bei dem erfindungsgemäßen Flurförderzeug 100 der erste Hebelarm L11 des Lastrollenhebels 113 verlängert.

Bei dem erfindungsgemäßen Flurförderzeug 100 ist somit durch die Verlängerung des ersten Hebelarms L11 des Lastrollenhebels 113 das Verhältnis L11/L2 des ersten Hebelarms L11 des Lastrollenhebels 113 zum zweiten Hebelarm L2 des Lastrollenhebels 113 größer als das Verhältnis L3/L4 des ersten Hebelarms L3 des Betätigungshebels 111 zum zweiten Hebelarm L4 des Betätigungshebels 111.

Durch dieses Rückneigen der Lastarme 105 in der angehobenen Stellung wird erzielt, dass ein auf den angehobenen Lastarmen 105 befindlicher Ladungsträger zurückgehalten wird, so dass die Gefahr verringert wird bzw. vermieden wird, dass ein auf den angehobenen Lastarmen 105 aufgenommener Ladungsträger bei einem Bremsvorgang auf den Lastarmen 105 rutschen kann und von den Lastarmen 105 rutschen kann, insbesondere wenn das Flurförderzeug 100 eine Rampe und somit eine geneigte Fahrbahn FB befährt und/oder der Ladungsträger, beispielsweise eine Gitterbox oder ein Rollenkäfig, aus einem rutschigen Material, beispielsweise Metall, besteht oder eine rutschige Oberfläche aufweist, mit der sich der Ladungsträger auf den Lastarmen 105 befindet, und somit zwischen den Lastarmen 105 und dem Ladungsträger ein geringer Reibungskoeffizient auftritt.

Bei dem erfindungsgemäßen Flurförderzeug 100 werden somit mit den zurückgeneigten angehobenen Lastarmen 105 durch das Verhindern eines Rutschens des Ladungsträgers auf den Lastarmen 105 bzw. von den Lastarmen 105 verhindert, dass es zu Beschädigungen an dem Ladungsträger sowie zu Beschädigungen an den mit dem Ladungsträger transportierten Ladungen kommt. Zudem wird verhindert, dass durch Rutschen des Ladungsträgers von den Lastarmen 105 sich in der näheren Umgebung des Flurförderzeugs 100 befindliche Gegenstände beschädigt werden und/oder sich in der näheren Umgebung des Flurförderzeugs 100 befindliche Personen gefährdet werden.

Da bei dem erfindungsgemäßen Flurförderzeug 100 ein Rutschen des Ladungsträgers auf den Lastarmen 105 bzw. von den Lastarmen 105 durch die in der angehobenen Stellung mittels der Initialhubvorrichtung 108 zurückgeneigten Lastarme 105 vermieden wird, kann das erfindungsgemäße Flurförderzeug 100 bei aufgenommenem und angehobenem Ladungsträger mit einer hohen Fahrgeschwindigkeit betrieben werden, so dass mit dem erfindungsgemäßen Flurförderzeug 100 eine hohe Umschlagsleistung erzielt werden kann.

## Patentansprüche

1. Flurförderzeug (100), insbesondere Hubwagen, mit einem Antriebsteil (102), das mindestens ein gelenktes Rad (103) aufweist, und einem zumindest einen Lastarm (105) umfassendes Lastteil (104), wobei der Lastarm (105) an der Spitze mit einer Lastrolleneinrichtung (106) versehen ist, wobei sich das Flurförderzeug (100) mittels des am Antriebsteil (102) angeordneten gelenkten Rades (103) und der an der Spitze des Lastarms (105) angeordneten Lastrolleneinrichtung (106) auf einer Fahrbahn (FB) abstützt, wobei der Lastteil (104) mittels einer Initialhubvorrichtung (108) relativ zum Antriebsteil (102) anhebbar und absenkbar ist, wobei die Lastrolleneinrichtung (106) über einen Lastrollenhebel (113) schwenkbar am Lastarm (105) angeordnet ist, wobei der Lastrollenhebel (113) an einem Schwenklager (114) an dem Lastarm (105) um eine Schwenkachse (S) schwenkbar gelagert ist und wobei die Initialhubvorrichtung (108) zum Anheben des Lastarms (105) ein mit dem Lastrollenhebel (113) in Wirkverbindung stehendes Gestänge (110) und einen das Gestänge (110) betätigenden Betätigungshebel (111) umfasst, wobei der Betätigungshebel (111) an einem Schwenklager (120) an dem Lastteil (104) um eine Schwenkachse (S1) schwenkbar gelagert ist und das Gestänge (110) an dem Betätigungshebel (111) an einem Koppelpunkt (K2) gelenkig angekoppelt ist, **dadurch gekennzeichnet, dass** der Betätigungshebel (111) an dem Antriebsteil (102) an einem weiteren Koppelpunkt (K1) gelenkig angekoppelt ist und die Kinematik des Lastrollenhebels (113) und/oder des Betätigungshebels (111) derart ausgeführt ist, dass beim Anheben des Lastteils (105) mittels der Initialhubvorrichtung (108) von der abgesenkten Stellung in die angehobene Stellung ein Rückneigen des Lastarms (105) erzielt wird.

2. Flurförderzeug nach Anspruch 1, **dadurch gekennzeichnet, dass** die Lastrolleneinrichtung (106) an dem Lastrollenhebel (113) mit einem ersten Hebelarm (L11) drehbar gelagert ist und das Gestänge (110) an dem Lastrollenhebel (113) mit einem zweiten Hebelarm (L2) gelenkig gekoppelt ist, wobei die Länge des ersten Hebelarms (L11) derart ausgeführt ist, dass beim Anheben des Lastteils (104) ein Rückneigen des Lastarms (105) erzielt wird.

## Claims

1. Industrial truck (100), in particular lifting truck, with a drive part (102) that has at least one steered wheel (103) and with a load part (104) comprising at least one load arm (105), wherein the load arm (105) is provided at the tip with a load roller device (106), wherein the industrial truck (100) is supported on a travel surface (FB) by means of the steered wheel (103) arranged on the drive part (102) and the load roller device (106) arranged at the tip of the load arm (105), wherein the load part (104) can be raised and lowered relative to the drive part (102) by means of an initial lifting apparatus (108), wherein the load roller device (106) is arranged on the load arm (105) so that it can be pivoted via a load roller lever (113), wherein the load roller lever (113) is mounted on a swivel bearing (114) on the load arm (105) so that it can be pivoted about a pivot axis (S) and wherein, for raising the load arm (105), the initial lifting apparatus (108) comprises a linkage (110) in operative connection with the load roller lever (113) and an actuating lever (111) actuating the linkage (110), wherein the actuating lever (111) is mounted on a swivel bearing (120) on the load part (104) so that it can be pivoted about a pivot axis (S1) and the linkage (110) is coupled in an articulated manner to the actuating lever (111) at a coupling point (K2), **characterized in that** the actuating lever (111) is coupled in an articulated manner to the drive part (102) at a further coupling point (K1) and the kinematics of the load roller lever (113) and/or of the actuating lever (111) is configured in such a manner that, when the load part (105) is being raised from the lowered position into the raised position by means of the initial lifting apparatus (108), a backwards tilting of the load arm (105) is achieved.

2. Industrial truck according to Claim 1, **characterized in that** the load roller device (106) is rotatably mounted on the load roller lever (113) by a first lever arm (L11) and the linkage (110) is coupled in an articulated manner to the load roller lever (113) by a second lever arm (L2), wherein the length of the first lever arm (L11) is configured in such a manner that, when the load part (104) is being raised, a backwards tilting of the load arm (105) is achieved.

## Revendications

1. Chariot de manutention (100), en particulier chariot élévateur, comprenant une partie d'entraînement (102) qui présente au moins une roue dirigée (103) et une partie de charge (104) comprenant au moins un bras de charge (105), le bras de charge (105) étant muni d'un dispositif à rouleau de charge (106) au niveau de sa pointe, le chariot de manutention (100) s'appuyant sur une voie de circulation (FB) au moyen de la roue dirigée (103) disposée sur la partie d'entraînement (102) et du dispositif à rouleau de charge (106) disposé au niveau de la pointe du bras de charge (105), la partie de charge (104) pouvant être soulevée et abaissée par rapport à la partie d'entraînement (102) au moyen d'un dispositif de levage initial (108), le dispositif à rouleau de charge (106) étant disposé au niveau du bras de charge (105) de manière à pouvoir pivoter par le biais d'un levier de rouleau de charge (113), le levier de rouleau de charge (113) étant supporté de manière à pouvoir pivoter autour d'un axe de pivotement (S) au niveau d'un palier de pivotement (114) sur le bras de charge (105) et le dispositif de levage initial (108) comprenant, pour soulever le bras de charge (105), une tringlerie (110) en liaison fonctionnelle avec le levier de rouleau de charge (113) et un levier d'actionnement (111) actionnant la tringlerie (110), le levier d'actionnement (111) étant supporté de manière à pouvoir pivoter autour d'un axe de pivotement (S1) au niveau d'un palier de pivotement (120) sur la partie de charge (104) et la tringlerie (110) étant raccordée de manière articulée au levier d'actionnement (111) au niveau d'un point d'accouplement (K2), **caractérisé en ce que** le levier d'actionnement (111) est accouplé de manière articulée à la partie d'entraînement (102) au niveau d'un point d'accouplement supplémentaire (K1) et la cinématique du levier de rouleau de charge (113) et/ou du levier d'actionnement (111) est réalisée de telle sorte que lors du soulèvement de la partie de charge (105) au moyen du dispositif de levage initial (108) de la position abaissée à la position soulevée, on obtient une inclinaison vers l'arrière du bras de charge (105).

2. Chariot de manutention selon la revendication 1, **caractérisé en ce que** le dispositif de rouleau de charge (106) est supporté à rotation au niveau du levier de rouleau de charge (113) par un premier bras de levier (L11) et la tringlerie (110) est accouplée de manière articulée au niveau du levier de rouleau de charge (113) avec un deuxième bras de levier (L2), la longueur du premier bras de levier (L11) étant réalisée de telle sorte que lors du soulèvement de la partie de charge (104), il se produise une inclinaison vers l'arrière du bras de charge (105).
